# EUROPÄISCHE PATENTSCHRIFT

(11) **EP 2 799 945 B1**
(45) Veröffentlichungstag und Bekanntmachung des Hinweises auf die Patenterteilung: **27.10.2021**
(21) Anmeldenummer: 14166653.7
(22) Anmeldetag: 30.04.2014
(51) Int. Cl.: G05B 15/02, G05B 13/04, F24F 11/00

(54) **Steuerung einer Klimatisierungsvorrichtung in Abhängigkeit von prognostizierten Umgebungsparametern**
Control of an air conditioning device depending on predicted environmental parameters
Commande d'un dispositif de climatisation en fonction de paramètres environnementaux pronostiqués

(30) Priorität: 30.04.2013 AT 3622013
(43) Veröffentlichungstag der Anmeldung: 05.11.2014
(73) Patentinhaber: Blue Sky Wetteranalysen Traunmüller u Reingruber OG, 4800 Attnang Puchheim (AT); Loy Tec electronics GmbH, 1170 Wien (AT); KUNESCH Consulting ZT GmbH, 4844 Regau (AT)
(72) Erfinder: Reingruber Mag., Klaus, 4800 Attnang Puchheim (AT); Traunmüller Mag., Wolfgang, 4800 Attnang Puchheim (AT); Kunesch DI Dr., Rudolf, 4844 Regau (AT); Döderlein DI, Andreas, 1170 Wien (AT)
(74) Vertreter: Ellmeyer, Wolfgang

(56) Entgegenhaltungen:
- WO-A1-2012/152939
- US-A- 4 897 798
- US-A1- 2012 265 350
- US-B1- 8 155 900
- None

## Beschreibung

Die Erfindung betrifft ein Verfahren zur Steuerung einer Klimatisierungsvorrichtung, welche Klimatisierungsvorrichtung einen Objektzustand eines wie Temperatur, Feuchte während des Betriebes der Klimatisierungsvorrichtung und in einem Nachwirkungsbereich des Betriebes der Klimatisierungsvorrichtung verändern kann. Das Objekt kann einen Luftraum und/oder feste und/oder flüssige Gegenstände umfassen.

Im Rahmen dieser Erfindung wird unter einer Klimatisierungseinrichtung eine Vorrichtung verstanden, mittels welcher Vorrichtung die Temperatur, die Feuchte des Objektes verändert werden kann. Die Klimatisierungsvorrichtung kann den Austausch von Teilbereichen des Objektes mit Umgebungsobjekten wie beispielsweise die von dem Objekt umfasste Luftmenge mit einer Luftmenge im Umgebungsbereich umfassen. Die Klimatisierungsvorrichtung kann beispielsweise eine Heizvorrichtung oder eine Klimaanlage eines Hauses sein.

Es wird weiters unter einem Zustand eines Objektes eine Objekttemperatur, eine Objektfeuchte et cetera verstanden. Der Zustand des Objektes ist eine physikalische Größe, welche mit Messmethoden nach dem Stand der Technik messbar ist. Ein Zustand wie beispielsweise eine Objekttemperatur kann mit weiteren Zuständen wie beispielsweise einer Objektfeuchte verbunden sein.

Ein Objekt sei im Rahmen dieser Erfindung ein Gegenstand mit definierten Ausmaßen, welcher einer bestimmten Nutzung durch einen Mensch oder ein Tier zugeführt ist oder eine Fertigung beherbergt. Ein Objekt kann beispielsweise ein Haus oder ein Wiese sein, in welchem oder auf welcher der Mensch oder das Tier sich aufhält oder eine Tätigkeit verrichtet. Die Erfindung ist keinesfalls auf Objekte mit eindeutigen Grenzen wie beispielsweise ein Haus mit Außenmauer beschränkt. Wie oben beispielhaft angeführt, kann das Objekt eine Wiese und zu der Wiese benachbarter Luftraum sein.

Das Objekt weist Objekteigenschaften auf. Die Objekteigenschaft ist durch eine spezifische Materialeigenschaft wie Wärmespeicherkoeffizient, Wärmeleitfähigkeit, Feuchtigkeit der zur Herstellung des Objektes verwendeten Materialien oder des vom Objekt eingeschlossenen Volumens vorgegeben.

Eine Klimatisierungsvorrichtung kann den Zustand eines Objektes direkt oder indirekt verändern. Eine direkte Veränderung liegt dann vor, wenn durch den Betrieb der Klimatisierungsvorrichtung der Objektzustand wie beispielsweise die Objekttemperatur oder die Objektfeuchte verändert wird. Eine Veränderung des Objektzustandes kann auch durch einen Austausch von Objektteilbereichen mit anderen Teilbereichen erfolgen.

Eine indirekte Veränderung liegt im Fall eines Betriebes der Klimatisierungsvorrichtung zur Steuerung des Einflusses von Umgebungsparametern auf das Objekt vor. Beispielsweise kann mittels einer Beschattungseinrichtung die Wirkung der Sonnenstrahlen auf die Erwärmung des Objektes, insbesondere des vom Objekt eingeschlossenen Volumens oder das Austrocknen eines Feldes gesteuert werden.

Die im Folgenden diskutierte Erfindung stellt sich die Aufgabe der Steuerung von Eigenschaften eines Objektes.

Einfache Verfahren nach dem Stand der Technik basieren darauf, dass eine oder mehrere Messgrößen im Objekt oder in dessen Umfeld gemessen werden. Die Steuerung der Klimatisierungsvorrichtung erfolgt auf Basis dieser Messgrößen. Das einfachste Beispiel hierzu ist die Bestimmung von Außen- und Innentemperatur zu einem Haus und die Steuerung eine Heizungsanlage auf Basis der Innen- und/oder Außentemperatur.

Es ist weiters bekannt, die Heizung eines Hauses in Abhängigkeit von regionalen oder überregionalen Wetterdaten zu steuern. In hierzu ähnlicher Weise kann die Steuerung einer Bewässerungsanlage für ein Feld in Abhängigkeit einer Niederschlagsprognose erfolgen. Diese Verfahren basieren nicht auf der Bestimmung des effektiven Einflusses der regionalen oder überregionalen Wetterprognosen auf das Objekt.

DE10013447 beschreibt ein mögliches Verfahren zur Steuerung des Klimas in einem wetterabhängigen Gebäude- oder Anlagenbetrieb. Das in diesem Dokument beschriebene Verfahren basiert auf die Steuerung eines oder mehrerer Klimageräte in Abhängigkeit von Umgebungsparametern wie Klimadaten ohne jedoch auf die zeitlich variierende oder auch konstant bleibende Wirkung der Klimadaten auf das Gebäude oder die Anlage, insbesondere Teile des Gebäudes oder der Anlage in Betracht zu ziehen. Die in DE1001347 beschriebene Korrektur der Klimadaten betrifft eine Korrektur der Wetterprognose, nicht jedoch eine Korrektur der Wirkung der Umgebungsparameter auf das Gebäude.

Die Offenbarung von DE10234365A1 beschränkt sich auf die Anbindung einer Steuervorrichtung für eine Klimatisierungs- und/oder Heizeinrichtung an das Internet, um so Wettervorhersagedaten für die Steuerung der Einrichtung zu erhalten. Es findet sich in diesem Dokument kein Hinweis auf eine Abfrage von Wettervorhersagedaten in Bezug auf eine Wirkung dieser auf das Gebäude.

Das in DE102008027257 beschriebene Verfahren umfasst auch keinen Hinweis auf eine Evaluierung der Umgebungsparameter in Hinblick auf einen Einfluss dieser auf das Gebäude.

Die Aufgabe der Steuerung einer Heiz- und/oder Klimavorrichtung wird in DE102008034923 auf die Weise gelöst, dass die Wetterprognose für einen Großraum mit den Wetterdaten eines Ortes abgeglichen wird. Dieser Lösungsansatz implementiert nicht die Bestimmung der Wirkung der Umgebungsparameter auf das Gebäude.

Das in DE102004032562 beschriebene Verfahren basiert auf gemittelten Wetterprognosen. Dies schließt die Berücksichtigung der Wirkung eines Umgebungsparameters auf das Objekt aus. DE202010011984 offenbart aufgabenhaft ein Steuerungsverfahren für eine Gebäudeanlage anhand von aktuellen Messwerten unter Berücksichtigung "aller möglichen Randbedingungen". Es findet sich kein Hinweis auf eine Berücksichtigung von zeitlichen Einflussfaktoren.

WO2012152939 offenbart nicht die Verwendung von prognostizierten Umgebungsparametern als Eingangswerte für eine Steuerung des Verfahrens. US4897798-A offenbart ein Verfahren zur Steuerung einer Klimatisierungsvorrichtung und nimmt eine periodische Schätzung von Variablen, welche als Indikatoren der Wärmecharakteristik eines Gebäudes dienen, vor, um Aufheiz- und Abkühlzeiten für das Gebäude zu bestimmen. Auf diese Weise wird der Zeitpunkt ermittelt, zu dem die Soll-Temperatur des Gebäudes erreicht wird. Hierbei werden u.a. die Wetterbedingungen außerhalb des Gebäudes in Betracht gezogen.

Die Verfahren nach dem Stand der Technik sind jedoch nicht hinreichend genau, um den Betrieb der Klimatisierungsvorrichtung in Hinblick auf den kleinst möglichen Einsatz von Energie und/oder Ressourcen durchzuführen. Verfahren nach dem Stand der Technik unterliegen dem Problem, dass es zu Abweichungen von zu gewährleistenden Objekteigenschaften kommen kann, welche in der Regel durch einen zusätzlichen Energieaufwand zu mindern sind.

Das im Rahmen dieser Offenbarung zu lösende Problem kann auch anhand des folgenden Beispiels - ohne auf den Gegenstand der Offenbarung einschränkend zu wirken - veranschaulicht werden. An einem kalten Wintertag muss ein Haus zu Tagesbeginn geheizt werden. Durch den Sonnenaufgang und die damit verbundene Sonneneinstrahlung auf das Haus wird dieses während der Mittagszeit erwärmt. Bei einer Nichtbeachtung des zeitlich abhängigen Einflussfaktoren wird durch das Zusammenwirken von Heizenergie, im Haus gespeicherter Wärmeenergie und Erwärmung durch die Sonnenstrahlen eine für den Nutzer unangenehm wirkende Überwärmung des Hauses hervorgerufen, welche durch die Abfuhr von Wärme und/oder durch zusätzliche Kühlenergie gemindert werden muss.

Die vorliegende Erfindung stellt sich dem Problem beziehungsweise der Herausforderung der effizienteren Nutzung von Energie. Die hier offenbarte Erfindung liegt dem Gedanken zugrunde, dass ein gewisses Maß an Energiezufuhr (gleichsam zu einem Maß an Energieabfuhr) notwendig ist, um einen gewünschten Objektzustand zu einem späteren Zeitpunkt t zu erreichen oder diesen zu halten. Die hier offenbarte Erfindung stellt sich die Aufgabe, der Minimierung des Energiebedarfes einer Klimatisierungsvorrichtung. Die Erfindung ist durch die unabhängigen Ansprüche definiert. Vorteilhafte Ausgestaltungen ergeben sich durch die abhängigen Ansprüche.

Das erfindungsgemäße Verfahren löst die oben beschriebene Aufgabenstellung auf die Weise einer Betrachtung der zeitlichen Wirkung der im Folgenden angeführten relevanten Eingangsparameter. Das erfindungsgemäße Verfahren zeichnet sich dadurch aus, dass die Steuerung der Klimatisierungsvorrichtung unter Berücksichtigung einer Energiebilanz zu einem Zeitpunkt t erfolgt, welche Energie aus
a) einer Prognose eines zeitlichen Verlaufes von Umgebungsparametern in einem Bereich um das Gebäude, in welchem Bereich die Umgebungsparameter eine Wirkung auf das Gebäude haben, wobei Berücksichtigung findet, dass ein anderer Umgebungsparameter, nämlich ein Stand der Sonne außerhalb des Bereiches keinen Einfluss auf das Gebäude hat, da die Sonnenstrahlen durch ein benachbartes Hindernis am Auftreffen auf das Gebäude gehindert werden, und
b) der zeitlich abhängigen Wirkung der Umgebungsparameter auf einen Teilbereich des Gebäudes welche Wirkung durch die zeitlich relevanten Objekteigenschaften vorgegeben ist, und
c) der zeitlich abhängigen Wirkung der Klimatisierungsvorrichtung auf das Gebäude als Eingangsparameter gebildet wird, sodass der Teilbereich des Gebäudes zu einem Zeitpunkt t+1 einen bestimmten Objektzustand innerhalb eines definierten Objektzustandsbereiches aufweist.

Die Berechnung eines Objektzustands wie beispielsweise die Temperatur des Objektes ist mittels einer Energiebilanz unter Berücksichtigung der oben angegebenen Eingangsparameter ist Stand der Technik. Die Energiebilanz kann einschließen, dass eine Sonnenstrahlung auf das Objekt mittels der nach dem Stand der Technik bekannten Perez-Formel oder nach dem Perez-Modell berechnet wird.

Das erfindungsgemäße Verfahren der Steuerung der Klimatisierungsvorrichtung mit Verfahren nach dem Stand der Technik und/oder mit empirisch ermittelten Erfahrungswerten kombiniert werden.

Der Objektzustand ist beispielsweise eine Temperatur oder eine spezifische Feuchte. Unter Anwendung der gängigen Lehre ist ein Objekt in Teilbereiche zu gliedern.

Die räumliche Ausdehnung der lokalen Prognose unterscheidet sich von einer allgemeinen Prognose dadurch, dass eine lokale Prognose in Abhängigkeit von dem zu prognostizierenden Umgebungsparameter abhängig. Das erfindungsgemäße Verfahren basiert vorzugsweise auf evaluierten Daten aus einer Wetterprognose zwischen dem Zeitpunkt t und dem späteren Zeitpunkt t+1. Die Erstellung von lokalen Prognosen erfolgt im Rahmen dieser Erfindung nach Verfahren nach dem Stand der Technik.

Die Erstellung einer für das Objekt relevanten lokalen Prognose der Umgebungsparameter kann die Berücksichtigung der Wirkung der Umgebungsparameter einer regionalen Wetterprognose einschließen.

Ein Umgebungsparameter kann beispielsweise eine Temperatur in einem Umgebungsbereich, eine Sonneneinstrahlung, ein Bewölkungsgrad et cetera sein.

Die Wirkung eines Umgebungsparameters auf das Objekt kann durch die Eigenschaft des Objektes selbst, durch weitere Objekte und die Eigenschaften der weiteren Objekte und durch die Wirkung eines weiteren Umgebungsparameters auf den Umgebungsparameter bestimmt werden. Das erfindungsgemäße Verfahren berücksichtigt obige Parameter, insbesondere die zeitliche Wirkung auf das Objekt. Die Wirkung eines Umgebungsparameters auf das Objekt ist durch die Gesetze der Physik vorgegeben. Die Wirkung eines Umgebungsparameters auf das Objekt ist mit Hilfe von Messmethoden nach dem Stand der Technik messbar.

Das erfindungsgemäße Verfahren berücksichtigt die Wirkung der Umgebungsparameter in dem Zeitraum beginnend mit dem Zeitpunkt und endendend mit dem Zeitpunkt t+1. Der Fachmann erkennt, dass ebenso der Objektzustand zum Zeitpunkt t zu berücksichtigen ist.

Weiters werden die zeitlichen Objekteigenschaften sowie der zeitlich veränderliche Zustand des Objektes berücksichtigt, da die temporäre und/oder nachhaltende Wirkung der Umgebungsparameter auf das Objekt ab einem beliebigen Zeitpunkt, insbesondere ab dem Zeitpunkt t durch diese bestimmt ist.

Das erfindungsgemäße Verfahren zeichnet sich unter anderem durch die Berücksichtigung der zeitlichen Wirkung der Anbindung der Klimatisierungsvorrichtung an das Objekt aus.

Die zeitliche Wirkung der Klimatisierungsvorrichtung ist nach gängiger Lehre im Wesentlichen von der Anbindung der Klimatisierungsvorrichtung an das zu erwärmende Medium, insbesondere durch die Materialeigenschaften der die Anbindung herstellenden Werkstücke gegeben. Die zeitliche Wirkung der unterschiedlichsten Klimatisierungsvorrichtungen in der Zeitspanne beginnend mit dem Zeitpunkt t und endend mit dem Zeitpunkt t+1 ist dem Fachmann bekannt. Ein Haus kann beispielsweise durch eine Luftkonvektionsheizung oder durch eine Fußbodenheizung geheizt werden, wobei die unterschiedlichen Heizsysteme eine unterschiedliche Wirkung auf das Haus haben. Das erfindungsgemäße Verfahren kann sich dadurch auszeichnen, diese unterschiedliche Wirkung zu berücksichtigen. Die zeitliche Wirkung der Klimatisierungsvorrichtung auf das Objekt ist durch die gängige Lehre beschreibbar. Der Objektzustand ist beispielsweise eine Temperatur oder eine spezifische Feuchte. Unter Anwendung der gängigen Lehre ist ein Objekt in Teilbereiche zu gliedern.

Der Objektzustand ist erfindungsgemäß durch einen Objektszustandsbereich definiert. Eine Person empfindet nach gängiger Forschung beispielsweise einen Temperaturbereich von circa 20°C bis 22°C als angenehm. Dieser Temperaturbereich ist selbstverständlich in Abhängigkeit von Faktoren wie die Tätigkeit der Person oder die Bekleidung der Person zu wählen. In hierzu analoger Weise können Bereiche für eine Fertigung oder für die Haltung eines Tieres gewählt werden.

Der Objektzustandsbereich ist durch seine Grenzwerte definiert. Ein Grenzwert des Objektzustandsbereiches kann beispielsweise eine um wenige Grad, insbesondere 2°C abgeminderte Solltemperatur sein. Ein Grenzwert ist im Rahmen der Offenbarung der Erfindung als jener Wert anzusehen, welcher Wert von einem gewünschten Objektzustand abweicht, jedoch für die Person nicht spürbar ist. Die Wahl der Grenzwerte erfolgt nach der einschlägigen Lehre der Psychologie und/oder nach empirischen Eingangswerten.

Die hier offenbarte Erfindung kann darauf basieren, dass während einer ersten Zeitspanne das Erreichen der Objekteigenschaften einer unteren Grenze des Objektzustandsbereiches zugelassen wird, da in einer nachfolgenden Zeitspanne zufolge des Wirkens von Umgebungsparametern auf das Objekt dieses einen Objektzustand oberhalb der unteren Grenze erreicht. Es sind bei der Wahl der unteren Grenze und der oberen Grenze die zeitliche Wirkung der relevanten Einflussparameter zu beachten. Durch die Definition des Objektzustandsbereiches wird ein definiertes Maß an zu tolerierenden abweichenden Werten definiert, um so den Energiebedarf der Klimatisierungsvorrichtung zu minimieren.

Die Steuerung des erfindungsgemäßen Verfahrens kann weiters in Abhängigkeit einer Wechselwirkung des Objektes mit den Umgebungsobjekten erfolgen, welche Wechselwirkung durch den Austausch von Teilbereichen des Objektes mit Teilbereichen von festen, flüssigen oder gasförmigen Umgebungsobjekten, welche ursprünglich in dem Bereich angeordnet sind, definiert ist.

Die Steuerung der Klimatisierungsvorrichtung kann in Abhängigkeit der spezifischen Wärmespeicherkapazität des Objektes und der Trägheit der Klimatisierungsvorrichtung, insbesondere der daraus resultierenden physikalischen Reaktionszeiten erfolgen.

In Anlehnung an Verfahren nach dem Stand der Technik kann die Steuerung der Klimatisierungsvorrichtung auch in Abhängigkeit von aktuellen Umgebungsparametern durchgeführt werden. Mittels aktueller Umgebungsparameter können auch zuvor erstellte Prognosen verifiziert werden.

Das erfindungsgemäße Verfahren kann sich dadurch auszeichnen, dass die Steuerung der Klimatisierungsvorrichtung in Abhängigkeit der tatsächlichen Nutzung und/oder einer prognostizierten Nutzung des Objektes während des Betriebes der Klimatisierungsvorrichtung und/oder während des Nachwirkungsbereiches und/oder nach dem Nachwirkungsbereiches erfolgt.

Die Nutzung eines Objektes wie beispielsweise eines Hauses kann eine Erwärmung des Hauses aufgrund des Betriebes von elektrischen Verbrauchern et cetera mit sich ziehen.

Das erfindungsgemäße Verfahren kann umfassen, dass die Wirkung der Umgebungsparameter durch einen Vergleich von temporären Objektzuständen mit dem Verlauf der Umgebungsparameter evaluiert wird.

Das erfindungsgemäße Verfahren kann selbst lernende Routinen umfassen. Diese dienen im Wesentlichen der ständigen Verbesserung der Steuerung der Klimatisierungsvorrichtung in Hinblick auf die Aufgabe der Erfindung. Die menschliche Nutzung eines Objektes durch einen starren Zeitablauf wie beispielsweise Arbeitsbeginn und Arbeitsende geprägt. Das erfindungsgemäße Verfahren kann Routinen zur Erfassung dieser Zeitabläufe und die Steuerung des Verfahrens auch in Abhängigkeit dieser Zeitabläufe umfassen.

Weiters kann das erfindungsgemäße Verfahren Routinen umfassen, welche die Ermittlung einer Prognose eines zeitlichen Verlaufes der Umgebungsparameter aus einer Prognose über den zeitlichen Verlauf weiterer Umgebungsparameter in einem weiteren Bereich erlauben.

Dieser Lösungsansatz der hier diskutierten Erfindung stellt die Lösung auf das Fehlen von Prognosen zu Umgebungsparametern dar. Das erfindungsgemäße Verfahren kann Routinen zur Ermittlung von für das Objekt relevanten Umgebungsparameter aus weiteren Umgebungsparametern umfassen. Die weiteren Umgebungsparameter stehen vorzugsweise in einem meteorologischen Zusammenhang mit den Umgebungsparametern.

Das erfindungsgemäße Verfahren wird in Ergänzung zu der obigen Beschreibung unter Verwendung der Figuren anhand von Anwendungsbeispielen erläutert, welche keinesfalls einschränkend auf den Gegenstand der Erfindung zu werten ist.
Figur 1 zeigt eine das erfindungsgemäße Verfahren veranschaulichende Prinzipskizze.
Figur 2 zeigt Diagramme über den Verlauf der Innentemperatur eines Hauses, dessen Klimatisierungsvorrichtung nach einem Verfahren nach dem Stand der Technik oder nach dem erfindungsgemäßen Verfahren gesteuert wird.

In den Figuren sind die nachstehenden Elemente durch die folgenden Bezugszeichen gekennzeichnet:
- 1: Klimatisierungsvorrichtung
- 2: Objekt
- 3, 3': Umgebungsparameter
- 4: Bereich
- 5: Mauer
- 6: Dach
- 7: Fenster
- 8: anderer Umgebungsparameter
- 9: Hindernis
- 10, 10': weiterer Bereich
- 11, 11': weiterer Umgebungsparameter
- 12: Knick
- 13: erster Zeitraum
- 14: zweiter Zeitraum
- 15: dritter Zeitraum
- 16: Maximalinnentemperatur

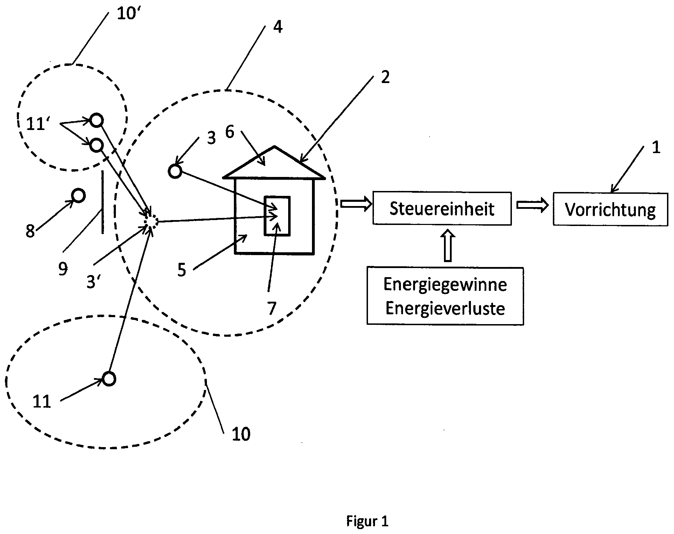

Figur 1 zeigt eine das erfindungsgemäße Verfahren veranschaulichende Prinzipskizze. Figur 1 veranschaulicht insbesondere die Wirkung der Umgebungsparameter. Das Verfahren zur Steuerung einer Klimatisierungsvorrichtung 1, welche Klimatisierungsvorrichtung 1 einen Objektzustand eines Objektes 2 aufweisend Objekteigenschaften während des Betriebes der Klimatisierungsvorrichtung 1 und in einem Nachwirkungsbereich des Betriebes der Klimatisierungsvorrichtung 1 verändern kann, läuft wie folgt ab.

Das Objekt 2 ist ein Haus umfassend eine Mauer 5, ein Dach 6 und ein Fenster 7. Die Mauer 5, das Dach 6 und das Fenster 7 bestimmen die Objekteigenschaften des Hauses.

Das erfindungsgemäße Verfahren zeichnet sich dadurch aus, dass die Steuerung der Klimatisierungsvorrichtung 1 in Abhängigkeit von einer Prognose eines zeitlichen Verlaufes von Umgebungsparametern 3 in einem Bereich 4 um das Objekt 2, in welchem Bereich 4 die Umgebungsparameter 3 eine Wirkung auf den Objektzustand haben. In Figur 1 ist um das Haus ein Bereich 4 definiert, in welchem ein bestimmter Umgebungsparameter 3 einen Einfluss auf den Objektzustand des Hauses hat. Im anhand der Figur 1 diskutierten Beispiel sei der Umgebungsparameter 3 der Stand der Sonne. Bei Stand der Sonne innerhalb des Bereiches 4 können die Sonnenstrahlen das Haus durch ein Auftreffen auf Mauer 5, Dach 6 und Eintreten in das Fenster 7 als Elemente des Objektes erwärmen.

Ein anderer Umgebungsparameter 8, nämlich ein Stand der Sonne außerhalb des Bereiches 4 hat keinen Einfluss auf das Haus, da die Sonnenstrahlen durch ein Hindernis 9 am Auftreffen auf das Haus gehindert werden. Der Umgebungsparameter 8 hat somit keine Wirkung auf den Zustand des Objektes 2.

Das erfindungsgemäße Verfahren umfasst Routinen, welche einen zeitlichen Verlauf des Umgebungsparameters 3 berechnen.

Es kann jedoch der Fall sein, dass ein Umgebungsparameter 3' für den Bereich 4 aus verschiedenen Gründen nicht vorhanden ist. Beispielsweise können Messstationen fehlen und/oder nicht genügend Messwerte vorhanden sein, um einen Verlauf des Umgebungsparameters 3' zu prognostizieren.

In der Regel sind jedoch weitere Umgebungsparameter 11, 11' in weiteren Bereichen 10, 10' vorhanden. Das erfindungsgemäße Verfahren schließt Methoden nach dem Stand der Meteorologie ein, welche die Berechnung eines Umgebungsparameters 3' auf Basis der weiteren Umgebungsparameter 11,11' erlaubt.

Die Mauer 5, das Dach 6 und das Fenster 7 sind aus unterschiedlichen Materialien hergestellt und weise unterschiedliche Formen auf, sodass der Umgebungsparameter 3 eine unterschiedliche Wirkung auf die Mauer 5, das Dach 6 oder das Fenster 7 hat. In Bezugnahme auf das verwendete Beispiel des Sonnenstandes und des Wirkens der Sonnenstrahlen auf das Objekt 2 erwärmen sich die Elemente des Objektes 2 unterschiedlich.

Aus diesem Grund erfolgt die Steuerung der Klimatisierungsvorrichtung 1 aufgrund der zeitlichen Wirkung der Umgebungsparameter 3 auf das Objekt 2, welche Wirkung durch die Objekteigenschaften vorgegeben sind. In Bezugnahme auf das verwendete Beispiel werden unter Objekteigenschaften unter anderem die Wärmeleitfähigkeit, die Wärmespeicherfähigkeit, die Farbe, die Ausrichtung verstanden.

Da die Umgebungsparameter prognostiziert werden, kann sich das erfindungsgemäße Verfahren im speziellen auf die prognostizierten Umgebungsparameter stützen, welche in der zu erstellenden Energiebilanz mit einem Faktor im Bezugnahme auf ihre Wirkung versehen werden.

Die Steuerung der Klimatisierungsvorrichtung erfolgt so, sodass das Objekt 2 zu einem späteren Zeitpunkt t einen bestimmten Objektzustand aufweist. Unter Verwendung des angeführten Beispiels kann die Klimatisierungsvorrichtung 1 eine Heizungsanlage sein.

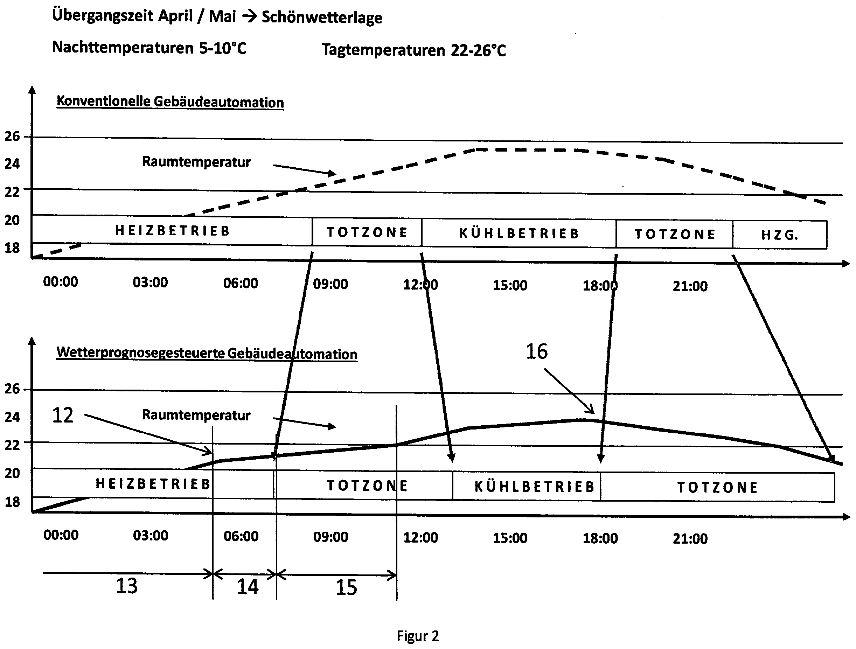

Figur 2 zeigt Diagramme über den Innentemperaturverlauf eines Hauses bei Steuerung der Klimatisierungsvorrichtung nach einem Verfahren nach dem Stand der Technik (Diagramm oben) und bei Steuerung der Klimatisierungsvorrichtung nach dem erfindungsgemäßen Verfahren (Diagramm unten).

Die Klimatisierungsvorrichtung ist eine Fußbodenheizung im Wesentlichen umfassend einen Boiler und im Fußboden des Hauses verlegte Schläuche samt Heizmedium. Die Wirkung der Klimatisierungsvorrichtung wird mittels eines Faktors in der zu erstellenden Energiebilanz berücksichtigt.

Es ist an der Abszisse die Zeit, an der Ordinate die Innentemperatur aufgetragen. Es ist die Innentemperatur bei Anwendung eines Verfahrens nach dem Stand der Technik durch eine gestrichelte Linie, bei Anwendung des erfindungsgemäßen Verfahrens durch eine durchgezogene Linie dargestellt. Der Betrieb der Klimatisierungsvorrichtung durch die Zeitspannen des Heizbetriebes und des Kühlbetriebes mit dazwischenliegenden Totzonen gegliedert. Während der Totzonen ist die Klimatisierungsvorrichtung nicht in Betrieb.

Bei dem Verfahren nach dem Stand der Technik wird die Dauer des Heizbetriebes ohne Berücksichtigung der zeitlichen Wirkung der Einflussfaktoren gewählt. Der Heizbetrieb wird - ohne Berücksichtigung von nachfolgenden Energieeinträgen - aufrechterhalten, um einen definierten Objektzustand zu halten beziehungsweise zu garantieren. Ein späterer Energieeintrag von außen wie beispielsweise Sonneneinstrahlung hat die Folge, dass im Vergleich zu der Anwendung des erfindungsgemäßen Verfahrens der Kühlbetrieb früher gestartet und somit der Kühlbetrieb über eine längere Zeitspanne geführt werden muss.

Das untere Diagramm weist während der Zeitspanne des ersten Heizbetriebes einen Knick 12 auf, welcher ein Hinweis auf eine Reduktion der Heizleistung in Bezugnahme auf die zeitliche Wirkungsweise der Heizung ist. Die Steuerungseinheit zur Durchführung des erfindungsgemäßen Verfahrens reduziert die Heizleistung der Klimatisierungsvorrichtung zu jenem Zeitpunkt t, zu welchem die Klimatisierungsvorrichtung hinreichend Heizenergie gespeichert hat, um zu einem definierten Zeitpunkt und für eine definierte Zeitspanne hinreichend Energie im Gesamtsystem gespeichert sind, sodass das Objekt zu einem Zeitpunkt t+1 einen definierten Objektzustand aufweist. Das Gesamtsystem umfasst die Klimatisierungsvorrichtung und das Objekt. Die Reduktion der Heizleistung geschieht unter Berücksichtigung der Prognose der zeitlichen Wirkung der Umgebungsparameter auf das Haus und unter Beachtung des Objektzustandsbereiches.

In einem ersten Zeitraum 13 vor dem Knick 12 erfolgt somit eine Erwärmung des Hauses durch den Betrieb der Klimatisierungsvorrichtung. Die Erwärmung des Objektes durch die Klimatisierungsvorrichtung erfolgt vorzugsweise nur in einem solchen Ausmaß, dass die Temperatur des Objektes im unteren Bereich des Objektzustandsbereiches liegt. In einem zweiten Zeitraum 14 nach dem Knick 12 erfolgt der Innentemperaturanstieg bei einer reduzierten Heizleistung der Klimatisierungsvorrichtung. Während des Zeitraumes 15 kommt es zu einem weiteren Innentemperaturanstieg obwohl die Klimatisierungsvorrichtung außer Betrieb ist, da im Gesamtsystem, insbesondere im Heizmedium Wärmeenergie gespeichert ist. Das erfindungsgemäße Verfahren kann unter anderem diesen Effekt nutzen, um das Maß der zugeführten Energie zu sparen.

Es ist auch Aufgabe der Steuervorrichtung die Zufuhr von Heizenergie zum Gesamtsystem so zu minimieren, sodass in dem anschließenden Kühlbetrieb möglichst wenig Kühlenergie benötigt wird. Ein Vergleich der Verläufe der Innentemperaturen zeigt, dass sich das erfindungsgemäße Verfahren durch eine geringe Maximalinnentemperatur 16 während des Kühlbetriebes auszeichnet. Obige Aufgabenstellung kann nur unter Berücksichtigung der zeitlichen Wirkung der oben beschriebenen Eingangsparameter.

Der Kühlbetrieb ist in Hinblick auf die zeitliche Wirkung des Kühlbetriebes auf den nachfolgenden Zeitraum zu wählen; die nachfolgende Totzone soll möglichst lang andauern.

Die Steuerung der Klimatisierungsvorrichtung erfolgt zusammenfassend anhand der errechenbaren Energiebilanz, in welche die Wirkung der Umgebungsparameter und die Wirkung der Klimatisierungsvorrichtung auf das Objekt als Eingangsparameter eingehen.

## Patentansprüche

1. Verfahren zur Steuerung einer Klimatisierungsvorrichtung (1), welche Klimatisierungsvorrichtung (1) einen Objektzustand eines Gebäudes (2), wie Temperatur, Feuchte während des Betriebes der Klimatisierungsvorrichtung (1) und in einem zeitlichen Nachwirkungsbereich des Betriebes der Klimatisierungsvorrichtung (1) verändern kann, **dadurch gekennzeichnet, dass**
die Steuerung der Vorrichtung (1) unter Berücksichtigung einer Energiebilanz für das Gebäude zu einem Zeitpunkt (t) erfolgt, welche Energiebilanz aus folgenden Eingangsparametern gebildet wird:
a) einer Prognose eines zeitlichen Verlaufes von Umgebungsparametern (3) in einem Bereich (4) um das Gebäude (2), in welchem Bereich (4) die Umgebungsparameter (3) eine Wirkung auf den Objektzustand haben, wobei Berücksichtigung findet, dass ein anderer Umgebungsparameter, nämlich ein Stand der Sonne außerhalb des Bereiches keinen Einfluss auf das Gebäude hat, da die Sonnenstrahlen durch ein benachbartes Hindernis am Auftreffen auf das Gebäude gehindert werden,
b) der zeitlich abhängigen Wirkung der Umgebungsparameter (3) auf einen Teilbereich des Gebäudes (2), welche Wirkung durch die zeitlich relevanten Objekteigenschaften vorgegeben ist, und
c) der zeitlich abhängigen Wirkung der Klimatisierungsvorrichtung (1) auf das Gebäude (2), sodass ein Teilbereich des Gebäudes (2) zu einem späteren Zeitpunkt (t+1) einen bestimmten Objektzustand innerhalb eines definierten Objektzustandsbereiches aufweist.

2. Verfahren nach Anspruch 1, **dadurch gekennzeichnet, dass**
die Steuerung des Verfahrens in Abhängigkeit des Austausches von Teilbereichen des Gebäudes (2) mit Teilbereichen von festen, flüssigen oder gasförmigen Umgebungsobjekten, welche ursprünglich in dem Bereich (4) angeordnet sind, erfolgt.

3. Verfahren nach einem der Ansprüche 1 oder 2, **dadurch gekennzeichnet, dass** die Steuerung der Klimatisierungsvorrichtung (1) in Abhängigkeit der spezifischen Wärmespeicherkapazität des Gebäudes (2) und der Trägheit der Vorrichtung (1), insbesondere der daraus resultierenden physikalischen Reaktionszeiten, erfolgt.

4. Verfahren nach einem der Ansprüche 1 bis 3, **dadurch gekennzeichnet, dass** die Klimatisierungsvorrichtung (1) in Abhängigkeit von aktuellen Umgebungsparametern (3) gesteuert wird.

5. Verfahren nach einem der Ansprüche 1 bis 4, **dadurch gekennzeichnet, dass** die Steuerung der Klimatisierungsvorrichtung (1) in Abhängigkeit der Nutzung des Gebäudes (2) während des Betriebes der Vorrichtung (1) und/oder während des Nachwirkungsbereiches und/oder nach dem Nachwirkungsbereich erfolgt.

6. Verfahren nach einem der Ansprüche 1 bis 5, **dadurch gekennzeichnet, dass** die Wirkung der Umgebungsparameter (3) durch einen Vergleich von temporären Objektzuständen mit dem Verlauf der Umgebungsparameter evaluiert wird.

7. Verfahren nach einem der Ansprüche 1 bis 6, **dadurch gekennzeichnet, dass** die Prognose eines zeitlichen Verlaufes der Umgebungsparameter (3) aus einer Prognose über den zeitlichen Verlauf weiterer Umgebungsparameter in einem weiteren Bereich ermittelt wird.

## Claims

1. A method for controlling an air conditioning device (1), said air conditioning device (1) being capable of changing an object condition of a building (2), such as temperature, humidity, while the air conditioning device (1) is operated and during a period of time in which the operation of the air conditioning device (1) has a continued effect,
**characterized in that**
the controlling of said device (1) is carried out based on the energy balance of the building at a time (t), said energy balance being determined based on the following input parameters:
a) a prognosis of a time-dependent development of environmental parameters (3) in an area (4) around the building (2), the environmental parameters (3) in said area (4) having an effect on the object condition, while taking into account that another environmental parameter, i.e., a position of the sun outside said area, does not have any effect on the building, because rays of sunshine are prevented from impinging on the building by an adjacent obstruction,
b) the time-dependent effect of the environmental parameters (3) on a section of said building (2), said effect being determined by the object characteristics that are temporally relevant, and
c) the time-dependent effect of the air conditioning device (1) on the building (2), so that a section of said building (2) reaches a certain object condition within a defined range of object conditions at a later point in time (t+1).

2. The method according to claim 1, **characterized in that**
the controlling of said method is carried out depending on the exchange of sections of the building (2) with sections of solid, liquid or gaseous objects in the environment that are originally located in said area (4).

3. The method according to claim 1 or claim 2, **characterized in that** the controlling of said air conditioning device (1) is carried out depending on the specific
heat storage capacity of the building (2) and the inertia of said device (1), in particular depending on the resulting physical reaction times.

4. The method according to any one of the claims 1 to 3, **characterized in that** said air conditioning device (1) is controlled based on current environmental parameters (3).

5. The method according to any one of the claims 1 to 4, **characterized in that** the controlling of said air conditioning device (1) is carried out based on the use of the building (2) while the device (1) is operated and/or while the operation of the device has a continued effect and/or after said continued effect has subsided.

6. The method according to any one of the claims 1 to 5, **characterized in that** the effect of said environmental parameters (3) is evaluated by a comparison of temporary object conditions with the development of said environmental parameters.

7. The method according to any one of the claims 1 to 6, **characterized in that** the prognosis of the time-dependent development of said environmental parameters (3) is determined based on a prognosis of the time-dependent development of other environmental parameters in another area.

## Revendications

1. Procédé de commande d'un dispositif de climatisation (1), ledit dispositif de climatisation (1) étant capable de modifier une condition d'objet d'un bâtiment (2), telle que la température, l'humidité, pendant que le fonctionnement du dispositif de climatisation (1) et pendant une période de temps au cours de laquelle le fonctionnement du dispositif de climatisation (1) a un effet prolongé,
**caractérisé en ce que**
la commande dudit dispositif (1) est effectuée sur la base du bilan énergétique du bâtiment à un instant (t), ledit bilan énergétique étant déterminé sur la base des paramètres d'entrée suivants :
a) un pronostic de l'évolution dans le temps de paramètres environnementaux (3) dans une zone (4) autour du bâtiment (2), les paramètres environnementaux (3) dans ladite zone (4) ayant un effet sur la condition d'objet, tout en tenant compte du fait qu'un autre paramètre environnemental, c'est-à-dire la position du soleil à l'extérieur de ladite zone, n'a aucun effet sur le bâtiment, car les rayons du soleil sont empêchés d'être incidents sur le bâtiment par un obstacle adjacent,
b) l'effet en fonction du temps des paramètres environnementaux (3) sur une partie dudit bâtiment (2), ledit effet étant déterminé par les caractéristiques d'objet qui sont pertinentes dans le temps, et
c) l'effet en fonction du temps du dispositif de climatisation (1) sur le bâtiment (2), de sorte qu'une partie dudit bâtiment (2) atteint une certaine condition d'objet dans une gamme définie de conditions d'objet à un instant ultérieur (t+1).

2. Procédé selon la revendication 1, **caractérisé en ce que**
la commande dudit procédé est effectuée en fonction de l'échange de parties du bâtiment (2) avec des objets solides, liquides ou gazeux dans l'environnement qui sont initialement situés dans ladite zone (4).

3. Procédé selon la revendication 1 ou la revendication 2, **caractérisé en ce que** la commande dudit dispositif de climatisation (1) est effectuée en fonction de la capacité
spécifique de stockage de chaleur du bâtiment (2) et de l'inertie dudit dispositif (1), notamment en fonction des temps de réaction physiques qui en résultent.

4. Procédé selon l'une quelconque des revendications 1 à 3, **caractérisé en ce que** ledit dispositif de climatisation (1) est commandé en fonction de paramètres environnementaux courants (3).

5. Procédé selon l'une quelconque des revendications 1 à 4, **caractérisé en ce que** la commande dudit dispositif de climatisation (1) est effectuée sur la base de l'utilisation du bâtiment (2) pendant le fonctionnement du dispositif (1) et/ou pendant que l'effet prolongé du fonctionnement du dispositif et/ou après que ledit effet prolongé ait cessé.

6. Procédé selon l'une quelconque des revendications 1 à 5, **caractérisé en ce que** l'effet desdits paramètres environnementaux (3) est évalué par une comparaison des conditions d'objet temporaires avec l'évolution desdits paramètres environnementaux.

7. Procédé selon l'une quelconque des revendications 1 à 6, **caractérisé en ce que** le pronostic de l'évolution dans le temps desdits paramètres environnementaux (3) est déterminé sur la base d'un pronostic de l'évolution dans le temps d'autres paramètres environnementaux dans une autre zone.
